# EUROPEAN PATENT APPLICATION

(11) **EP 1 548 077 A1**
(43) Date of publication of application: **29.06.2005**
(21) Application number: 03380308.1
(22) Date of filing: 26.12.2003
(51) Int. Cl.: C09J 4/00

(54) **cyanoacrylic-based adhesive composition for sealing biological tissues**

(71) Applicant: Biotechnology Institute BTI I+D, 01510 Minano - Alava (ES)
(72) Inventor: Anitua Aldecoa, Eduardo, 01510 Minano - Alava (ES)
(74) Representative: Davila Baz, Angel

(57) **Abstract**

An adhesive composition is presented which comprises an alkyl cyanoacrylate, preferably n-butyl cyanoacrylate, a phenolic antioxidant and a sulfonic acid salt. The formulation is designed for binding tissues in oral surgery and is biocompatible, furthermore, with the content of inhibitors, the stability has been adjusted to at least one year, without the necessity of refrigeration.

## Description

### SCOPE OF THE INVENTION

The present invention refers to an adhesive composition, based on the property of alkyl cyanoacrylate of effectively binding biological tissues at room temperature without needing a polymerization initiator other than the moisture of the substrate, which contains n-butyl cyanoacrylate; to its obtainment method and to its use in the preparation of an adhesive formulation for sealing biological tissues.

### STATE OF THE ART

The adhesive properties of cyanoacrylic monomers are discovered by chance while investigating different series of 1,1-disubstituted ethylenes in the Eastman-Kodak laboratories. In measuring the refractive index of ethyl cyanoacrylate, the prisms of the refractometer were strongly adhered together¹ (see literature section).

Since the 1950s, innumerable patents have been filed which encompass different synthesis methods of cyanoacrylates and their improvements, the development of adhesive formulations, the use of different sterilization methods, and the applications of the compositions based on cyanoacrylates in different fields of industry and medicine¹.

A great advantage of the cyanoacrylates which makes them attractive over other adhesives is their capacity to bond a wide variety of substrates such as: metals, plastics, gums, glass, among others.

Alkyl cyanoacrylates have generated great interest as surgical adhesives. They have been used to replace sutures in ocular surgery, vascular surgery, sutures for the skin and in the repair of soft tissues, such as the spleen, liver and lungs. They have also been tested in aerosol form as hemostatic agents in superficial wounds and abrasions². Normally, adhesion occurs in a few seconds, the final strength of the bond is achieved after 24 hours, but 60% of the final strength can be achieved in 10 minutes.

### Chemical synthesis and development of adhesive formulations

Alkyl cyanoacrylates are prepared by depolymerization of the polycyanoacrylate obtained as a consequence of a Knoevenagel-type condensation reaction between the corresponding cyanoacetate and formaldehyde³. The water and the bases must be removed and neutralized prior to carrying out depolymerization to prevent the polymerization of the monomer during its distillation

Depolymerization constitutes the most critical point in the synthesis of cyanoacrylic derivatives. A power supply is required which is able to cleave the bonds of the polymer and to allow the distillation of the monomer with a strict control of the process. The addition of acid inhibitors is of vital importance, since small amounts of weak bases and moisture residues can cause the anionic polymerization of the monomer in the vapor as well as liquid phase. The resulting product is vacuum distilled to obtain the pure cyanoacrylate.

When analyzing the formula of the alkyl cyanoacrylates, the possibility of their polymerization by a radical as well as anionic mechanism can be observed. Of the two, the most favored mechanism is the anionic mechanism and is counteracted by the incorporation of acid inhibitors during depolymerization. On the other hand, the free radicals can be activated by the working temperatures and also by unsuitable monomer storage conditions, being able to cause the solidification of the adhesive in its container. For this reason, radical polymerization inhibitors are also added in sufficient amounts for stabilizing the monomer and maintaining a suitable working life period.

### Antioxidants

Antioxidants are compounds which can delay oxidation of molecules either by inhibition of the initiation or propagation steps of the chain reactions.

Within the typical antioxidants, sterically hindered phenolic antioxidants, secondary aromatic amines, sulfonated phenolic antioxidants, compounds containing copper or phosphorus, organic sulfurs, disulfurs and polysulfurs can be found. Mixtures of these are also suitable for different applications due to the synergism they exhibit.

The antioxidant activity of the phenolic compounds is mainly due to their redox properties, which play an important role in the absorption and neutralization of the free radicals. Therefore, they are able to protect against oxidation and premature degradation, as well as to provide stability against high temperatures.

Thiodiethylene bis[3-(3,5-di-*t*-butyl-4-hydroxyphenyl)propionate] (A1), octadecyl 3-(3,5-di-*t*-butyl-4-hydroxyphenyl)propionate (A2), pentaerythritol tetrakis [3-(3,5-di-*t*-butyl-4-hydroxyphenyl)propionate], di-α-tocopherol linoleate (A3) are examples of sterically hindered phenolic antioxidants used as additives in a large amount of plastics to prevent their oxidation and to increase their stability against temperatures and radiations.

The anionic inhibitors most widely used for stabilizing the cyanoacrylic monomers have been diphosphorus pentoxide, phosphoric acid and sulfur dioxide, whereas hydroquinone. catechol and their derivatives are used at a radical polymerization level. The choice of the suitable inhibitor and that of the optimal amounts to be used depend on the cyanoacrylic ester at hand and on the application for which the adhesive is intended. Combinations thereof are added in different proportions during the depolymerization and purification steps.

*Sulfonic acids* and some *carboxylic and anhydride acids* supply a subsequent anionic polymerization inhibiting ability. Their advantage compared to gas inhibitors is based on the fact that they can be added more precisely to the adhesive composition.

The most widely used free radical inhibitor is hydroquinone, although phenolictype inhibitors, such as p-methoxyphenol, catechol, pyrocatechol, etc., have also been used. In normal conditions, the concentration of inhibitors of this type is not critical since an excess does not affect anionic polymerization, and therefore does not affect the adhesive capability of the composition. Normally, concentrations between 0.001 and 1% by weight are used with regard to the cyanoacrylate present in the formulation.

Adhesive formulations based on alkyl cyanoacrylates, depending on their final application, can also have additives such as colorings, bactericide agents, thickeners, plasticizers, crosslinkers, among others⁴.

The coloring of the monomer is occasionally desirable in order to increase visibility of the application site of the adhesive. The addition of small amounts of anthraquinone and other quinolines allows coloring the adhesive product without affecting the curing process or the strength of the adhesive bonds.

Bactericide and bacteriostatic agents are added to cyanoacrylic adhesives for clinical application, even though there are studies affirming that the adhesive itself has these properties. This property has been questioned on several occasions and many manufacturers of cyanoacrylate for medical use have preferred adding bactericide or bacteriostatic agents to the composition. An example of these additives is povidone iodine.

A wide variety of thickeners is used to increase viscosity and to thus facilitate their handling in cases where required. Formulations with different percentages of polycyanoacrylates, polymethacrylates, lactic and glycolic acid polymers, among others, can be found.

The plasticizers are used for improving the flexibility of the adhesive bond, these include aliphatic monoesters, dialkyl esters of aliphatic dicarboxylic, trialkyl and triaryl phosphate acids, among others.

The crosslinking agents are added to adhesive formulations to increase the stability of the cohesive bond. those most used are alkyl bis(2-cyanoacrylates). triaryl isocyanurates and dimethylacrylates

In the formulations designed for clinical use, the unnecessary use of additives is prevented since the additives may affect the tolerance, either by alteration or necrosis of the tissues where the adhesive is applied, or by the introduction of toxic elements.

Another important aspect to take into account when developing alky cyanoacrylates for their use in surgery is the necessity to sterilize them. There are several works proving the negative effect of the different sterilization techniques on the stability of the monomer ⁵⁻⁷, increasing their viscosity and decreasing their working life, due to which some manufacturers prefer to carry out packaging in aseptic conditions. The other variant is to achieve a ratio of inhibitors which ensures stability of the product against high temperatures or radiations normally used in a sterilization process.

Some studies conclude that hydroquinone decomposes due to the radiations, producing benzoquinone, a toxic element therefore prohibited in formulations for clinical use. For this reason, some manufacturers have decided to replace it with antioxidants such as butylated hydroxyanisole and butylated hydroxytoluene⁵.

In spite of the presence of radical polymerization inhibitors in adhesive formulations, the majority of manufacturers of cyanoacrylates for clinical use recommend storing them at temperatures of less than 10°C to ensure their stability for the indicated working life.

### Applications of cyanoacrylic adhesives in oral surgery.

References of the application of cyanoacrylic adhesives in the most diverse surgical areas as substitutes or complements of sutures can be found. These adhesives can replace tedious and complicated suture methods, allowing to hermetically seal against the passage of air and water, sealing blood vessels and internal organs, such as the liver or kidneys, and they are also useful in carrying out bone knitting and fixing medical devices to the skin².

From the aesthetic point of view, surgical adhesives have a series of advantages making them widely used in aesthetic surgery. In ophthalmic surgery, they have been used to seal cornea perforations and to substitute sutures in different interventions and in fixing biomaterials².

Oral surgery within the different specialties (maxillofacial, periodontal, oncological, etc.) requires carrying out a large number of wounds for the purpose of improving the dental and bone condition, which in turn improve the aesthetic as well as functional aspect⁸⁻¹⁰. To close these wounds, suture has traditionally been used. However, this procedure entails certain problems and drawbacks, among which it is worth mentioning the incomplete closure of the tearing, prone to contamination in such a hostile medium, post-operation bleeding, the exfoliation of some biomaterials used in bone rehabilitation, as well as the problems pertinent to the use of sutures in that sensitive and difficult to isolate region. The use of cyanoacrylate tissue adhesives is an alternative technique which provides a series of advantages with regard to suture.

Cyanoacrylic esters have been used in Stomatology as fossa and fissure sealants, in the elaboration of restoration materials, bracket bonding in orthodontia, as a filler of radicular canals and protector of the dental pulp, as a periodontal dressing and in gingival surgery, among other applications^{2, 11-13}.

These products have also been applied, in aerosol form or from a bottle connected to the compression system of the dental unit, to coat the mucoperiosteal flap in surgery. Furthermore, the use of aerosol to coat biopsy sites in the soft palate, interdental papillae, orbital cavity, etc., is reported. Treatment with cyanoacrylic adhesives is particularly used in the palate and represents the only possible procedure where sutures cannot be used. Several examples of interventions in which cyanoacrylate adhesives can be used are indicated below:
Apicectomy.
Surgical removal of retained molars.
Implants.
Extirpation of hyperplasia in the alveolar zone.
Periodontal surgery.
Biopsies.
Buccal aphthae.
Hemostatis of bleeding of the gums.
Gingival autografts.

The general advantages of using adhesives in oral surgery could be summarized as follows:
They are easy to apply.
In traumatology of the oral mucosa, it is not necessary to use anesthesia to bind the edges of the tissue.
It can be used as periodontal dressing.
It allows brushing the operated zone and the ingestion of foods immediately after the intervention.
Airtight sealing of the intervened zone.
It favors the non-exfoliation of biomaterials placed in the bone defects
In gingival grafts. the donor site is perfectly protected, favoring scarring also in the donated site.
Surgical time is considerably reduced with trained professionals.

The material has been used in wounds with dimensions exceeding 70 mm, in which alternating sutures have been carried out to decrease tensions on the edges. In this case, more than 50% of the suture can be eliminated.

According to the aforementioned, there is a continuous need to provide improved cyanoacrylic-based adhesive compositions which are stable and prevent the unnecessary use of additives.

### LITERATURE

1.- Wells A. Cyanoacrylate resins -The instant adhesives. A monograph of their applications and technology. Henry Lee Ed., (Pasadena Technology Press, Los Angeles, USA, 1981. p 1-4
2.- Naessig V. Cyanoacrylate resins -The instant adhesives. A monograph of their applications and technology. Henry Lee Ed., (Pasadena Technology Press, Los Angeles, USA, 1981. p 143-151
3.- Winkler B. and Miyaji W. Cyanoacrylate resins -The instant adhesives. A monograph of their applications and technology. Henry Lee Ed., (Pasadena Technology Press, Los Angeles, USA, 1981. p 8-10
4.- Maimone F. Cyanoacrylate resins -The instant adhesives. A monograph of their applications and technology. Henry Lee Ed., (Pasadena Technology Press, Los Angeles, USA, 1981. p 91-116
5.- US Patent 5,530,037 Sterilized cyanoacrylate adhesive composition, and a method of making such a composition, 1996
6.- WO 00/16615 Methods for sterilizing cyanoacrylate compositions. 2000
7.- WO 01/12243 A1 Sterilized cyanoacrylate solutions containing thickeners. 2001
8.- Harry, H.W. Cirugía Bucal, volume II, ED. Rev, 1987.
9.- Andreasen, J.O. Lesiones traumáticas de los dientes, Ed. Rev. Ciudad de la Habana.
10.- Shafer, W.G. Patologia Bucal, Ed. Rev. La Habana, 1988
11.- Herod E.L. Cyanoacrylates in dentistry: A review of the literature. J. Can. Dental Assoc. Vol. 56, p 331-334, 1990
12.- Berkman M, Cuccolor F, Levin N, Brunelle L. Pulpal response to isobutyl Cyanoacrylate in human teeth. J. Am. Dent. Assoc. 8 (3), p 140, 1971.
13 - Cvek M. Granath L. Jones PC. Austin J. Hard tissue barrier formation in pulpotomized monkey teeth capped with cyanoacrylate or calcium hydroxide for 10 and 60 minutes. J. Dentistry. 66, p 1166-74, 1987.

### DESCRIPTION OF THE INVENTION

Now a new adhesive composition has been found which complies with the previously named requirements, based on n-butyl cyanoacrylate, with a one-year stability without the need of refrigeration. This composition includes, as a radical polymerization inhibitor, a primary phenolic antioxidant at a ratio between 0.1-0.3% (m/v). This formulation also contains a sulfonic acid derivative as an anionic polymerization inhibitor at a ratio between 0.1-0.3% (m/v).

Therefore, according to a first aspect, the present invention refers to an adhesive composition comprising:
- at least one alkyl cyanoacrylate of 2-8 carbon atoms in the side chain
- an anionic polymerization inhibitor
- and a sterically hindered phenolic antioxidant as a free radical catcher.

The alkyl cyanoacrylate is preferably n-butyl cyanoacrylate.

According to another preferred embodiment, the anionic polymerization inhibitor is toluene-4-sulfonic acid monohydrate, at a ratio of less than 1% (m/v).

Furthermore, according to an additional embodiment, the antioxidant is thiodiethylene bis[3-(3,5-di-*t*-butyl-4-hydroxyphenyl)propionate] at a ratio of less than 1% (m/v).

On the other hand, the adhesive composition according to the invention can also incorporate at least one of colorings, bactericide agents, bacteriostatic agents, thickeners, plasticizers and crosslinkers.

According to a second aspect, the present invention refers to a process for obtaining an adhesive composition according to the foregoing, which comprises the steps of:
a) reacting n-butyl cyanoacetate and paraformaldehyde in the presence of toluene, acetic acid and piperidine hydrochloride, with continuous stirring, at a temperature between 85 and 120°C;
b) simultaneous extraction of water formed by distillation of its azeotrope with toluene:
c) removal of the remaining solvent by distillation, obtaining an n-butyl cyanoacrylate oligomer;
d) depolymerization of the oligomer by means of vacuum distillation, in the presence of thiodiethylene bis[3-(3.5-di-t-butyl-4-hydroxyphenyl)propionate], diphosphorus pentoxide and toluene-4-sulfonic acid monohydrate. with heating with hot air at 500-700°C;
e) distillation in the presence of thiodiethylene bis[3-(3,5-di-*t*-butyl-4-hydroxyphenyl)propionate] and toluene-4-sulfonic acid monohydrate at a temperature of 90-120°C and a pressure of less than 2 mm/Hg;
f) stabilization by means of the addition of 0.1-0.3 (m/v) of toluene-4-sulfonic acid monohydrate

The alkyl cyanoacrylate, preferably n-butyl, is obtained by means of the Knoevenagel method. Stoichiometric amounts of n-butyl cyanoacetate and paraformaldehyde are reacted with continuous stirring between 85 and 120° C in the presence of toluene, 0.5% acetic acid and piperidine hydrochloride as a catalyst. The water formed as a product of the condensation reaction is simultaneously extracted by distillation of its azeotrope with toluene. When this step has concluded, the remaining solvent is removed by distillation. In this step, an n-butyl cyanoacrylate oligomer is obtained.

Depolymerization is carried out by means of vacuum distillation (at a pressure of less than 2 mm/Hg), in the presence of thiodiethylene bis[3-(3,5-di-*t*-butyl-4-hydroxyphenyl)propionate], diphosphorus pentoxide and p-toluene sulfonic acid as polymerization inhibitors. The heating method used is through hot air at a temperature between 500 and 750° C.

The impure monomer is distilled in the presence of thiodiethylene bis[3-(3,5-di-*t*-butyl-4-hydroxyphenyl)propionate] and p-toluene sulfonic acid under pressure of less than 2 mm/Hg and at a temperature between 90-120° C. The pure cyanoacrylate is again stabilized with 0.1-0.3 (m/v) of p-toluene sulfonic acid.

According to another aspect of the invention, the latter refers to the use of the adhesive composition according to the invention in the preparation of an adhesive formulation for the binding of tissues in surgery, especially in oral surgery, without the necessity of using sutures or staples, in wounds without tension of less than approximately 5 cm.

According to another aspect, the invention refers to the use of the adhesive composition according to the invention in the preparation of an adhesive composition for the binding of tissues in surgery. especially in oral surgery, together with the use of sutures or staples, in wounds exceeding approximately 5 cm

According to an additional aspect. the present invention refers to the use of the adhesive composition according to the invention in the preparation of an adhesive formulation for the binding of tissues. without the necessity of using sutures or staples. in wounds in biological tissues, especially the skin, without tension and of less than approximately 5 cm.

According to another aspect, the invention refers to the use of the adhesive composition according to the invention in the preparation of an adhesive formulation to seal tissues in wounds in biological tissues, especially the skin, without tension and exceeding approximately 5 cm, together with sutures or staples.

The invention is additionally explained below based on a series of examples, with a non-limiting character of the scope of the invention.

### EXAMPLES

### Example 1

The adhesive composition obtained according to the invention is transparent, colorless, of high fluidity. The IR and H¹-NMR spectra correspond with the n-butyl cyanoacrylate, the signals associated to the main functional groups thereof being indicated in the tables below:

| ***Main IR bands*** | | | | | |
|---|---|---|---|---|---|
| **Functional group** | **HC(=C)** | **CN** | **C=O** | **C-O** | **C=C** |
| **Wave numbers (cm**^{**-1**}**)** | 2972 | 2236 | 1739 | 1182 and 1295 | 1613 |

| ***Chemical shifts according* to *H***^{***1***}***-NMR*** | | | |
|---|---|---|---|
| **Protons** | **M** | **A** | δ **(ppm)** |
| **Ha** | s | **1H**^{**+**} | 7.02 |
| **Hb** | s | **1H**^{**+**} | 6.61 |
| **H**_{**5**} | t | **2H**^{**+**} | 4.25 |
| **H**_{**6**} | m | **2H**^{**+**} | 1.68 |
| **H**_{**7**} | m | **2H**^{**+**} | 1.40 |
| **H**_{**8**} | t | **3H**^{**+**} | 0.93 |

The concentration of the inhibitors and their consumption over time can be monitored by Gas Chromatography.

The curing time determined by FT-IR in KBr pellets is 2 hours, whereas on skin it is 10 seconds and the strength of the adhesive bond is suitable for the proposed applications.

To facilitate application of the adhesive, the formulation must have a viscosity between 2 and 10 mPa.s, a range in which the adhesive properties are not affected.

The formulation must be stored in polypropylene, high density polyethylene or glass containers, protected from direct light and from moisture to ensure its stability. As can be seen in the examples, the formulation containing antioxidant A1 is stable for at least one year without needing refrigeration

### Examples 2-5

Four syntheses were carried out according to the process according to the invention, varying the radical polymerization inhibitor. Depending upon the case, hydroquinone, A1, A2 or A3 were used, respectively, in equal ratios. The viscosity is measured in a Ubbelohde viscometer at 24°C. 15 ml of adhesive are taken, stored under the conditions described, and the decay time to the different established periods is measured.

| ***Variation of viscosity of the different formulations without refrigeration*** | | | | |
|---|---|---|---|---|
| **Inhibitor** | **Viscosity at zero time (mPa.s)** | **Viscosity at 3 months (mPa.s)** | **Viscosity at 6 months (mPa.s)** | **Viscosity at 12 months (mPa.s)** |
| **Hydroquinone** | 2.57 | - | - | - |
| **A1** | 2.69 | 4.37 | 5.70 | 7.52 |
| **A2** | 2.95 | - | - | - |
| **A3** | 2.50 | - | - | - |

Out of the adhesive formulations stored at room temperature, those prepared with hydroquinone and the A2 and A3 antioxidants respectively, polymerized at approximately 8 weeks. In the case of the preparation containing the A1 antioxidant, a gradual increase of viscosity is observed within the desired ranges without polymerizing in the period of one year. The storage temperature is between 19-30°C.

| ***Variation of viscosity of the different formulations at -15°C*** | | | | |
|---|---|---|---|---|
| **Inhibitor** | **Viscosity at zero time (mPa.s)** | **Viscosity at 3 months (mPa.s)** | **Viscosity at 6 months (mPa.s)** | **Viscosity at 12 months (mPa.s)** |
| **Hydroquinone** | 2.57 | 2.83 | 3.12 | 3.80 |
| **A1** | 2.69 | 3.31 | 3.76 | 4.74 |
| **A2** | 2.44 | 3.10 | 4.43 | 7.01 |
| **A3** | 2.50 | 2.85 | 3.04 | 3.82 |

The stability of all the formulations at -15°C is acceptable, the increase of viscosity is gradual and in the analyzed period, none exceeded the desired range.

Stability exceeding one year at -15°C was obtained with all the inhibitors, and stability of at least one year at 30°C was obtained with the A1 antioxidant, exceeding the other formulations.

### Example 6: Application methodology

The amount of adhesive to be applied must be the minimum amount possible the surfaces to be binded must approach one another with the aid of some surgical means. the adhesive is applied. and pressure is maintained for approximately 40-70 seconds to ensure proper sealing. A moisture excess in the application zone and an adhesive excess must be prevented, it must also be prevented that the adhesive penetrates the inner area of the wound, as this would affect the scarring process. In the case of wounds larger than approximately 5 cm, it is recommendable to apply sutures as an anchor between zones sealed with adhesive.

Due to its mechanical properties and its tolerance, the formulation, in spite of being designed for oral surgery, can be used to seal wounds in the skin which are not subjected to tension.

## Claims

1. An adhesive composition **characterized in that** it comprises:
- at least one alkyl cyanoacrylate of 2-8 carbon atoms in the side chain
- an anionic polymerization inhibitor
- and a sterically hindered phenolic antioxidant as a free radical catcher.

2. An adhesive composition according to claim 1, **characterized in that** the alkyl cyanoacrylate is preferably n-butyl cyanoacrylate.

3. An adhesive composition according to any of claims 1 and 2, **characterized in that** the anionic polymerization inhibitor is toluene-4-sulfonic acid monohydrate, at a ratio of less than 1% (m/v).

4. An adhesive composition according to any of claims 1 to 3, **characterized in that** the antioxidant is thiodiethylene bis[3-(3,5-di-*t*-butyl-4-hydroxyphenyl)propionate] at a ratio of less than 1% (m/v).

5. An adhesive composition according to any of claims 1 to 4, **characterized in that** it comprises at least one of colorings, bactericide agents, bacteriostatic agents, thickeners, plasticizers and crosslinkers.

6. A processes for obtaining a composition according to claims 1 to 5, **characterized in that** it comprises the steps of:
a) reacting n-butyl cyanoacetate and paraformaldehyde in the presence of toluene, acetic acid and piperidine hydrochloride, with continuous stirring, at a temperature between 85 and 120°C;
b) simultaneous extraction of water formed by distillation of its azeotrope with toluene;
c) removal of the remaining solvent by distillation, obtaining an n-butyl cyanoacrylate oligomer;
d) depolymerization of the oligomer by means of vacuum distillation, in the presence of thiodiethylene bis[3-(3,5-di-*t*-butyl-4-hydroxyphenyl)propionate], diphosphorus pentoxide and toluene-4-sulfonic acid monohydrate, applying heat with hot air at 500-700°C;
e) distillation in the presence of thiodiethylene bis[3-(3,5-di-*t*-butyl-4-hydroxyphenyl)propionate] and toluene-4-sulfonic acid monohydrate at a temperature of 90-120°C and a pressure of less than 2 mm/Hg;
f) stabilization by means of the addition of 0.1-0.3 (m/v) of toluene-4-sulfonic acid monohydrate

7. The use of the adhesive composition according to claims 1 to 5 in the preparation of an adhesive formulation for the binding of tissues in surgery, without the necessity of using sutures or staples in wounds without tension of less than approximately 5 cm.

8. The use of the adhesive composition according to claims 1 to 5 in the preparation of an adhesive formulation for the binding of tissues in surgery together with the use of sutures or staples in wounds exceeding approximately 5 cm.

9. The use of the adhesive composition according to claims 1 to 5 in the preparation of an adhesive formulation for the binding of tissues, without the necessity of using sutures or staples, in wounds in biological tissues without tension and of less than approximately 5 cm.

10. The use of the adhesive composition according to claims 1 to 5 in the preparation of an adhesive formulation for the binding of tissues in biological tissues without tension and exceeding approximately 5 cm, together with sutures or staples.
